# EUROPÄISCHE PATENTSCHRIFT

(11) **EP 3 693 274 B1**
(45) Veröffentlichungstag und Bekanntmachung des Hinweises auf die Patenterteilung: **25.06.2025**
(21) Anmeldenummer: 20150890.0
(22) Anmeldetag: 09.01.2020
(51) Int. Cl.: B64D 11/06, B60N 2/90

(54) **FLUGZEUGSITZ-MASSAGESYSTEM UND FLUGZEUGSITZ MIT EINEM MASSAGESYSTEM**
AIRCRAFT SEAT MASSAGE SYSTEM AND AIRCRAFT SEAT COMPRISING A MASSAGE SYSTEM
SYSTÈME DE MASSAGE DANS SIÈGE D'AVION ET SIÈGE D'AVION DOTÉ D'UN SYSTÈME DE MASSAGE

(30) Priorität: 07.02.2019 DE 102019201591
(43) Veröffentlichungstag der Anmeldung: 12.08.2020
(73) Patentinhaber: Bühler Motor GmbH, 90459 Nürnberg (DE)
(72) Erfinder: SCHLOSSER, Stefan, 91301 Forchheim (DE); GRÖLLICH, Stefan, 88690 Uhldingen-Mühlhofen (DE); WELTER, Christof, 88690 Uhldingen Mühlhofen (DE)

(56) Entgegenhaltungen:
- DE-A1- 102017 205 135
- GB-A- 2 495 521
- US-A1- 2008 097 260
- US-A1- 2011 282 495
- US-A1- 2018 222 370
- US-B1- 6 273 810

## Beschreibung

Die Erfindung betrifft ein Flugzeugsitz-Massagesystem (1), mit einem Pumpenmodul (2), das als Pumpenmotor unter Verwendung eines BLDC-Motors ausgebildet ist, zur Förderung eines gasförmigen Mediums, einem Ventilmodul (3) zur Zuführung und/oder zum Ablassen des gasförmigen Mediums zu bzw. aus einer Mehrzahl von füllbaren Gaskissen (4).

Der stetig steigende Anspruch an den Sitzkomfort eines Flugzeugsitzes, sowie der Wunsch der Airlines nach Alleinstellungsmerkmalen stellt für Sitzhersteller und Anbieter von Sitzsteuerungssystemen eine zunehmende Herausforderung dar. Zudem eignen sich standardisierte Flugzeugsitze nur für 90 bis 95% der Flugpassagiere. Die übrigen Nutzer stellen aufgrund ihrer Körpergröße und ihres Gewichts sehr individuelle und anspruchsvolle Anforderungen an einen komfortablen Fluggastsitz.

Bei längeren Flügen, insbesondere bei Langstreckenflügen kann es aufgrund von mangelnder Bewegungsmöglichkeiten zu Verspannungen der Muskulatur, Muskelverhärtungen und zu Durchblutungsstörungen bei den Flugreisenden kommen. Bei First-Class Sitzen ist in der Regel ein höherer Sitzkomfort vorhanden, wobei die Sitze eine größere Zahl von Einstellmöglichkeiten zur Anpassung der Sitzgeometrie und der Sitzhärte an den jeweiligen Passagier aufweisen. Es sind auch Flugzeugsitze mit Massagefunktion bekannt. Diese sind jedoch speziell auf die Bedürfnisse der First-Class Sitze ausgelegt und im Sitzsteuerungssystem (Seat Actuation System - SAS) integriert.

Aus der GB 2495521 A ist eine Vorrichtung zum Aufpumpen und Entleeren von Luftkammern in Sitzen bekannt. Die Vorrichtung umfasst eine Luftpumpe und ein oder mehrere Ventile. Weiterhin eine Steuervorrichtung um die Pumpe und die Ventile derart anzusteuern, die Luftkammern zu befüllen oder zu entleeren. Weiterhin offenbart die US 6,273,810 B1 eine Luftkammerunterstützung für Fahrzeugsitze mit einer Steuereinheit, die eine Pumpe und eine Mehrzahl an Ventilen in Verbindung mit einer Mehrzahl an Luftkissen steuert.

Die DE 10 2017 205 135 A1 offenbart eine Steueranorndnung in einem Fahrzeug zum Ansteuern einer Komfortfunktion des Fahrzeugs mit mindestens einer Steuereinheit, die mindestens die Komfortfunktion bereitstellende Vorrichtung ansteuert; und mindestens einer Detektionseinheit, die mit der Steuereinheit in Verbindung steht, wobei die Detektionseinheit eine Orientierung zumindest eines Teils eines Fahrzeugsitzes in einem Fahrzeuginnenraum detektiert, und die detektiere Fahrzeugsitzorientierung an die Steuereinheit übermittelt, und die Steuereinheit die Komfortfunktion der Vorrichtung in Abhängigkeit der detektierten Fahrzeugsitzorientierung ansteuert.

Aufgabe der Erfindung ist es ein gattungsgemäßes Flugzeugsitz-Massagesystem zur Verfügung zu stellen, das möglichst flexibel für unterschiedliche Anforderungen aller Sitzklassen oder Sitzkomfortklassen skalierbar, modular aufgebaut und unabhängig von einem Sitzsteuersystem betreibbar ist, wobei ein möglichst geräuscharmer Betrieb gewährleistet werden soll.

Diese Aufgabe wird erfindungsgemäß durch die Merkmale des Anspruchs 1 gelöst.

Damit das Flugzeugsitz-Massagesystem einfach in bestehende Systeme integrierbar ist, sind für die interne Kommunikation zwischen den Modulen Standardprotokolle einsetzbar. Dadurch lässt sich der System-Master auch von einem übergeordneten System steuern. Das erfindungsgemäße Flugzeugsitz-Massagesystem kann aber auch völlig unabhängig von anderen Systemen betrieben werden. Häufig eingesetzte Bus-Protokolle, wie CAN, LIN oder RS485 sind hierbei verwendbar. Bei wirtschaftlicheren Systemen kann auch auf eine aufwändige Bus-Architektur verzichtet werden und das Pumpenmodul durch eine einfache Spannungsversorgungsleitung angebunden werden. Durch Steuern oder Regeln der Spannung kann dadurch die Drehzahl des Pumpenmotors eingestellt werden. Bei Verwendung eines BLDC-Motors kann auch eine Drehzahlsteuerleitung an einen Drehzahleingang des Motors geführt sein. Optional ist der Pumpenmotor mit einem Temperatursensor ausgestattet, dieser kann durch eine eigene Leitung mit dem System-Master verbunden sein.

Bei einem komfortablen Flugzeugsitz-Massagesystem sind eine Vielzahl von Gaskissen (4) vorgesehen. Diese sind auf unterschiedliche Sitzteile verteilt. Ein Teil der Gaskissen ist in einer Rückenlehne (13) angeordnet, ein Teil in einem Sitzteil und ein Teil in einer Beinauflage.

Weiterbildungen der Erfindung werden in den Unteransprüchen näher dargestellt.

Die Anzahl, die Anordnung und die Größe der Gaskissen (4) sind frei wählbar und an die Anforderungen des Sitzes, der Airline und letztlich an die Erwartungen der Passagiere anpassbar. Hierzu ist jedes Gaskissen (4) oder Gruppen von Gaskissen individuell ansteuerbar. Damit ist eine größere Anzahl an Massageprogrammen ausführbar und die einzelnen Gaskissen (4) feinfühliger steuer- und/oder regelbar. Das Massagesystem umfasst mindestens zwei Gaskissen, insbesondere zwanzig, insbesondere vierzig Gaskissen. Diese sind teilweise mehrreihig angeordnet.

Die Pumpenverbindungsleitung (5) und/oder die Gaskissenverbindungsleitungen (7) sind vorzugsweise flexible Schlauchverbindungen. Dadurch können sie problemlos verlegt werden und sich an unterschiedliche Sitzeinstellungen anpassen. Besonders bei einer Standalone-Lösung, also ohne Integration in ein Sitzsteuerungssystem kann es sinnvoll sein eine Schaltereinheit und/oder eine PCU (Passenger Control Unit) direkt ohne Busverbindung mit dem System-Master zu verbinden.

Für die optionale Integration des Massagesystems in ein bestehendes Sitzsteuerungssystem ist ein Bus-Anschluss (9) am System-Master (Ventilmodul (3) oder Pumpenmodul (2)) vorhanden, an welchen eine Bus-Steuerleitung des Sitzsteuerungssystems anschließbar ist.

Gemäß einer besonders vorteilhaften Weiterentwicklung der Erfindung ist vorgesehen, dass ein Anschluss von Drucksensoren (23) an das Massagesystem möglich ist. Die Drucksensoren können im Sitz auf der Sitzfläche, der Rückenlehne und sogar in einer Beinauflage integriert sein. Dabei kann es sich beispielhaft um eine Matrix aus Piezo-Sensoren handeln, durch welche das Gewicht, die Gewichtsverteilung und auch die Größe des Passagiers detektiert werden kann. Im einfachsten Fall können Drucksensoren (23) den Sitzbelegungsstatus des Flugzeugsitzes erfassen. Schließlich lässt sich auch der Kissendruck über Drucksensoren (23) ermitteln. Die Messdaten können über den Datenbus an das Ventilmodul (3) gemeldet werden, welches dann evtl. unter Berücksichtigung weiterer Informationen über den Passagier die Pumpenparameter und Ventileinstellungen steuert.

Das Flugzeugsitz-Massagesystem ist nach einem weiteren Vorschlag auch um eine Heizfunktion erweiterbar, demnach sind ein oder mehrere Gaskissen (4) mit einem Heizelement, einer Heizmatte o. ä. ausgestattet. Dabei sind die Heizfunktionen der einzelnen Gaskissen individuell ansteuerbar und/oder regelbar. In Weiterbildung dieser Zusatzfunktion kann die Heizfunktion der Gaskissen (4) abhängig von einem Massageprogramm und/oder abhängig von der Umgebungstemperatur in der Kabine und/oder als Ersatz für eine herkömmliche Sitzheizungsfunktion ansteuerbar sein.

Die Ansteuerung dieser Heizfunktion ist über das Sitzsteuerungssystem (8) oder über den System-Master möglich.

Der Passagier selbst kann über eine Benutzerschnittstelle (HMI) das Massagesystem steuern. Hierbei kann er indirekt über eine Sitzsteuerung definierte Voreinstellungen für das Massagesystem aktivieren oder spezielle Massageprogramme aus einem Menü wählen. Die Benutzerschnittstelle kann über ein Kabel oder über eine drahtlose Schnittstelle, z. B. über eine Bluetooth-Verbindung mit dem Massagesystem verbunden sein.

Um einen möglichst geräuscharmen und zuverlässigen Betrieb des Massagesystems zu gewährleisten, werden die Ventile des Ventilmoduls (3) durch Formgedächtniselemente betätigt. Die Ventile lassen sich so auch besonders wirtschaftlich und ohne das Gewicht des Ventilmoduls (3) erheblich zu vergrößern individuell öffnen oder schließen. Es ist möglich für jedes Ventil ein eigenes Formgedächtniselement einzusetzen. In besonderen Fällen lassen sich auch Ventilfunktionen miteinander verkoppeln, wobei dann ein Formgedächtniselement mehr als ein Ventil betätigt.

Weiter sind am Ventilmodul (3) Zusatzanschlüsse (24) für weitere Gaskissen (4) vorgesehen, die je nach Einsatzfall verwendet werden oder ungenutzt bleiben. Das Flugzeugsitz-Massagesystem soll möglichst flexibel einsetzbar sein und deshalb entsprechend eines Baukastensystems aufgebaut sein. Damit die Bauteilezahl des Baukastens möglichst gering bleibt, werden die einzelnen Module, insbesondere das Ventilmodul(3) so ausgestaltet, dass es für einfache Sitze z. B. der Economy-Class als auch für hochwertigere First-Class-Sitze einsetzbar ist.

Um den Verkabelungsaufwand des Massagesystems so gering wie möglich zu halten ist weiter eine Daisy-Chain-Verschaltung vorgesehen.

Hinsichtlich einer besseren Service-Freundlichkeit ist vorgesehen, dass der System-Master zur Durchführung eines Selbsttests ein eingebautes Testequipment aufweist (Built-In-TestEquipment - BITE). Dieses enthält auch einen elektronischen Fehlerspeicher in welchem während des Flugs Systemparameter, insbesondere Systemfehler oder Fehlercodes gespeichert werden. Die Daten können bei einem Check bequem über eine Schnittstelle ausgelesen werden.

Da das Massagesystem voll integrierbar ist, kann der Fehlerspeicher auch in einem anderen vorhandenen übergeordneten Flugzeug-Daten-Modul angeordnet sein, z. B. in einem Inflight-Entertainment-Modul oder in einer Passenger Control Unit (PCU). Bei schwerwiegenden Fehlern kann das Bordpersonal auch während des Flugs auf Probleme aufmerksam gemacht werden.

Ein Teil der Sitzkissen (4) ist auch als Lordosenstütze (16) einsetzbar. In diesem Fall sind die Gaskissen meist größer ausgebildet als die übrigen Gaskissen (4), die vorwiegend für die Massagefunktionen verwendet werden. Dabei erstrecken sich die Lordosenstützen (16) über einen größeren Teil der Rückenlehnenbreite als die übrigen Gaskissen (4), die auch in mehreren Reihen angeordnet sein können um eine bessere Anpassungsfähigkeit an den Körper des Passagiers zu ermöglichen.

Für die Befestigung der Gaskissen (4) am Sitz ist eine Reihe von Möglichkeiten denkbar. Dabei kommt es vor allem darauf an, dass die Montage der Gaskissen möglichst unkompliziert und evtl. auch korrigierbar ist. Erfindungsgemäß können die Gaskissen demnach mittels Flansch- oder Klettverschluss oder mittels Reißverschluss mit einem Sitzelement verbunden sein. Da übliche Gaskissen aus einem brennbaren Material bestehen, befinden sie sich in der Regel in einem flammenhemmenden Bezug. Dieser lässt sich leicht mit einem der genannten Montagemitteln versehen.

Höherentwickelte Flugzeugsitzsysteme weisen Auswertemodule für Passagierdaten auf. Auch das erfindungsgemäße unabhängig betreibbare Flugzeugsitz-Massagesystem lässt sich mit einem Auswertemodul (12) für Passagierdaten individuell auf die Bedürfnisse des Passagiers voreinstellen oder auch Programme laden oder aktivieren, die individuell auf den jeweiligen Passagier zugeschnitten sind. Hierbei lassen sich auch hierfür freigegebene Patientendaten verwenden. Die Passagierdaten können durch eine Chipkarte, aus einem Mobile Device, durch eine gesicherte Internetverbindung oder durch gespeicherte Daten der Airline eingelesen werden. Stets ist auch eine manuelle Eingabe von Daten möglich.

Die Passagierdaten lassen sich beispielsweise dafür verwenden, um den Füllgrad einer Mehrzahl von Gaskissen (4) an die Größe und das Gewicht des Passagiers anzupassen. Dadurch wird verhindert, dass ein Passagier sich nach dem Einsteigen ins Flugzeug zunächst mit der Bedienung eines falsch eingestellten Sitzes befassen muss.

Zweckmäßigerweise sollte die Füllung der Gaskissen (4) in Abhängigkeit von der Sitzposition steuerbar sein, da die einzelnen Funktionen in der Regel nicht in allen Sitzpositionen sinnvoll sind. In der TTL-Position (Taxi-Takeoff-Landing), also der Start und Lande-Position kommt es weniger auf ein entspanntes Reisen als auf eine sichere Position an. Dabei sollte der Füllgrad der Gaskissen möglichst für einen stabilen Halt des Passagiers optimiert sein. Grundsätzlich lässt sich aber auch in dieser Position eine Massagefunktion integrieren.

In einer Relax-Position hingegen stehen andere Eigenschaften des Sitzes im Vordergrund. Deshalb weist der Sitz in dieser Stellung eine Massagesitz-Funktionalität auf, in welcher die Gasmenge in den Gaskissen (4) alternierend erhöht und reduziert werden kann. Dabei besteht die Möglichkeit die Dynamik der Massagefunktion beliebig einzustellen. Grundsätzlich jedoch kann auch in den übrigen Sitzpositionen eine Massagefunktion implementiert sein.

Sehr vorteilhaft ist auch eine Aktivsitz-Funktion durch welche eine unmerkliche Umlagerung des Sitzpassagiers durch allmähliches Füllen und Ablassen des gasförmigen Mediums aus einzelnen oder einer Mehrzahl von Gaskissen (4) erfolgt. Dadurch werden die Wirbelsäule und/oder die umgebende Muskulatur bewegt, um den Bandscheiben eine Regenerationsphase zu ermöglichen. Dies verhindert oder lindert Rückenbeschwerden durch zu langes statisches Sitzen.

Bei einer dritten Sitzposition, der Liegeposition (Full Flat) ist der Sitz für die Bedürfnisse eines bequemen Schlafs optimiert, insbesondere für die individuellen Bedürfnisse des jeweiligen Passagiers. Da unterschiedliche Passagiere hierbei unterschiedliche Gewohnheiten und Bedürfnisse haben lassen sich auch für diesen Fall vordefinierte Programme oder statische Einstellungen wählen. Die diesbezüglichen Daten können wie bereits erwähnt auch vorab übermittelt werden. Sinnvollerweise stehen unterschiedliche Massageprogramme in den drei genannten Sitzpositionen zur Verfügung oder die Programme passen sich an die jeweilige Sitzposition an.

Im Übrigen wird auch ein Flugzeugsitz mit einem Massagesystem beansprucht, welches zumindest einer der genannten Ausführungen entspricht oder zumindest eine der genannten Funktionen erfüllt.

Ein Ausführungsbeispiel der Erfindung wird nachfolgend anhand der Zeichnung näher erläutert. Es zeigen:
- Fig. 1: ein Schaltbild eines Flugzeugsitz-Massagesystems,
- Fig. 2a: ein Flugzeugsitz in einer TTL-Position,
- Fig. 2b: der Flugzeugsitz in einer Relax-Position und
- Fig. 2c: der Flugzeugsitz in einer Liegeposition.

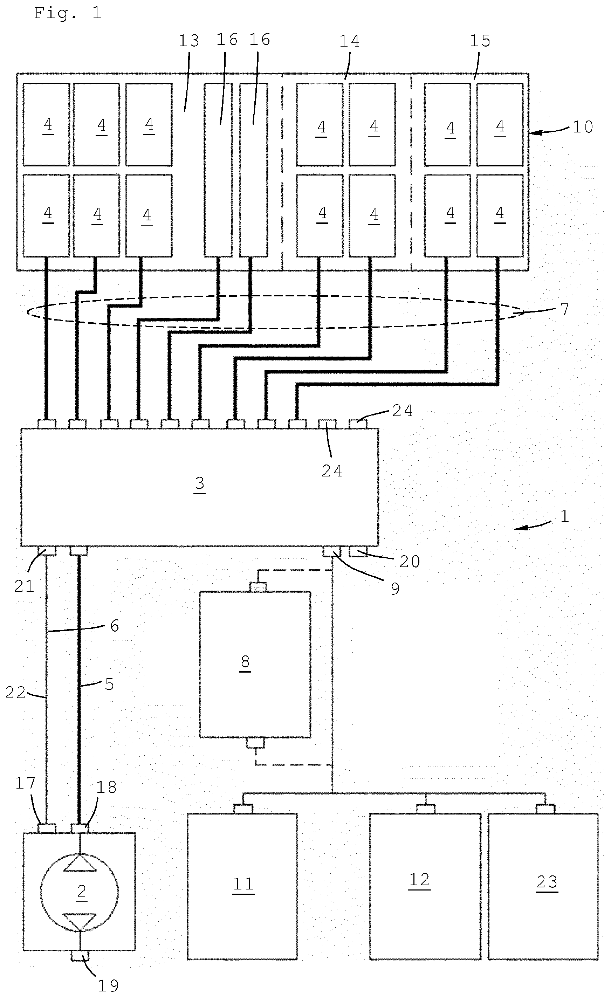

Fig. 1 zeigt ein Blockschaltbild eines Flugzeugsitz-Massagesystems 1, mit einem angedeuteten Flugzeugsitz 10, mit einem Pumpenmodul 2, welches im Wesentlichen aus einer Pneumatikpumpe besteht, die einen Pumpensteuereingang 17, einen Luftschlauchanschluss 18 und einen Luftablass 19 aufweist, einem Ventilmodul 3, welches über eine Pumpenverbindungsleitung 5 mit dem Pumpenmodul 2 und über Gaskissenverbindungsleitungen 7 mit einer Vielzahl von Gaskissen 4 verbunden ist. Am Ventilmodul 3 sind nicht benutzte Zusatzanschlüsse 24 für den Anschluss weiterer Gaskissen vorgesehen. Diese Zusatzanschlüsse 24 sind möglicherweise in einer anderen Applikation erforderlich. Für eine optionale Daisy-Chain-Verschaltung ist das Ventilmodul 3 mit einem Ausgangsanschluss 20 versehen (hier freier Anschluss). Die Gaskissen 4 sind in mehrere Gruppen aufgeteilt, auf eine Rückenlehne 13, ein Sitzteil 14 und eine Beinauflage 15. Die einzelnen Sitzglieder sind durch gestrichelte Linien voneinander abgegrenzt. Hier sind jeweils zwei Reihen mit Gaskissen 4 dargestellt, wobei der Einfachheit halber nicht alle Gaskissenverbindungsleitungen 7 dargestellt sind. An der Rückenlehne 13 sind zusätzlich zwei Gaskissen dargestellt, die als Lordosenstütze 16 dienen und die sich über einen größeren Teil der Sitzbreite erstrecken und ein deutlich größeres Volumen aufweisen als die für die Massagefunktion dienenden Gaskissen 4. Für die Erweiterung des Flugzeugsitz-Massagesystems 1 mit weiteren Funktionen oder für die Integration in ein Sitzsteuerungssystem ist das Ventilmodul 3 mit einem Bus-Anschluss 9 versehen. Daneben ist das Pumpenmodul 2 über eine Bus-Leitung 22 an eine Leistungs- und Datenschnittstelle 21 des Ventilmoduls 2 angeschlossen.

Im gezeigten Beispiel ist das Ventilmodul 3 als System-Master ausgeführt und das Pumpenmodul 2 als Slave. Das Flugzeugsitz-Massagemodul funktioniert völlig unabhängig von einem Sitzsteuersystem 8, das hier als Option dargestellt ist, lässt sich aber einfach integrieren.

Eine Benutzerschnittstelle 11 ist vorgesehen, um die Massagefunktion auszulösen oder einzustellen. Falls ein Sitzsteuerungssystem integriert ist, kann dieses über dieselbe Benutzerschnittstelle 11 bedient werden.

Weiter lassen sich Datenmodule anschließen, um **z. B.** Messwerte von Drucksensoren 23 oder gespeicherte Passagierdaten zu sammeln und dem System-Master (hier Ventilmodul 3) zuzuführen.

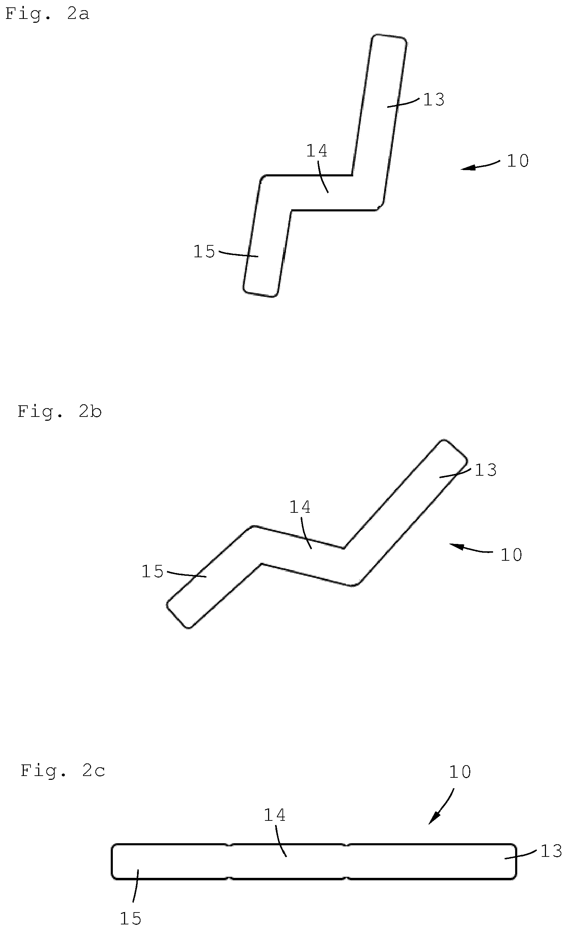

Fig. 2a zeigt einen stilisierten Flugzeugsitz 10 in einer TTL-Position (Taxi-Takeoff-Landing), mit einer Rückenlehne 13, einem Sitzteil 14 und einer Beinauflage 15. Diese Position wird insbesondere beim Starten und Landen des Flugzeugs oder in einer sonstigen Gefahrensituation vorschriftsmäßig eingenommen. In dieser Sitzposition steht der Sicherheitsaspekt im Vordergrund, deshalb sollen hier die Gaskissen eine möglichst stabile Sitzposition ermöglichen. Dies kann beispielsweise durch eine Erhöhung des Drucks in seitlichen Gaskissen realisiert werden.

Fig. 2b zeigt den Flugzeugsitz 10 in einer Relax-Stellung. Dabei ist sowohl die Rückenlehne 13 als auch die Beinauflage 15 gegenüber der TTL-Position (Taxi-Takeoff-Landing) geneigt. Auch das Sitzteil 14 ist zur Erhöhung des Komforts nach hinten geneigt. Der Neigungswinkel ist frei vom Passagier wählbar ohne Einschränkungen der Massagefunktion.

Fig. 2c zeigt den Flugzeugsitz 10 in einer Liegeposition (Full Flat). Dabei sind die Rückenlehne 13, das Sitzteil 14 und die Beinauflage in einer Linie ausgerichtet. Diese Stellung dient als Schlafposition, deshalb können die Gaskissen den Bedürfnissen des Passagiers entsprechend mehr oder weniger weich eingestellt werden.

Die Erfindung ist nicht auf das gezeigte Beispiel beschränkt, sondern umfasst alle Varianten, die unter den Hauptgedanken gemäß Anspruch 1 fällt.

### Bezugszeichenliste

- 1: Flugzeugsitz-Massagesystem
- 2: Pumpenmodul
- 3: Ventilmodul
- 4: Gaskissen
- 5: Pumpenverbindungsleitung
- 6: Steuerleitung
- 7: Gaskissenverbindungsleitung
- 8: Sitzsteuersystem
- 9: Bus-Anschluss
- 10: Flugzeugsitz
- 11: Benutzerschnittstelle
- 12: Auswertemodul
- 13: Rückenlehne
- 14: Sitzteil
- 15: Beinauflage
- 16: Lordosenstütze
- 17: Pumpensteuereingang
- 18: Luftschlauchanschluss
- 19: Luftauslass
- 20: Ausgangsanschluss
- 21: Datenschnittstelle
- 22: Bus-Leitung
- 23: Drucksensor
- 24: Zusatzanschluss

Die Erfindung betrifft ein Flugzeugsitz-Massagesystem (1), mit einem Pumpenmodul (2), das als Pumpenmotor unter Verwendung eines BLDC-Motors ausgebildet ist, zur Förderung eines gasförmigen Mediums, einem Ventilmodul (3) zur Zuführung und/oder zum Ablassen des gasförmigen Mediums zu bzw. aus einer Mehrzahl von füllbaren Gaskissen (4). Aufgabe der Erfindung ist es ein gattungsgemäßes Flugzeugsitz-Massagesystem zur Verfügung zu stellen, das möglichst flexibel für unterschiedliche Anforderungen von der Economy Class bis zur First Class skalierbar, modular aufgebaut und unabhängig von einem Sitzsteuersystem betreibbar ist, wobei ein möglichst geräuscharmer Betrieb gewährleistet ist. Diese Aufgabe wird erfindungsgemäß durch die Merkmale des Anspruchs 1 gelöst.

## Patentansprüche

1. Flugzeugsitz-Massagesystem (1), mit einer Mehrzahl von füllbaren Gaskissen, einem Pumpenmodul (2), das einen Pumpenmotor aufweist, der als bürstenloser Gleichstrommotor, BLDC-Motor, ausgebildet ist, zur Förderung eines gasförmigen Mediums, und einem Ventilmodul (3) zur Zuführung und/oder zum Ablassen des gasförmigen Mediums zu bzw. aus der Mehrzahl von füllbaren Gaskissen (4), wobei zwischen dem Pumpenmodul (2) und dem Ventilmodul (3) eine Pumpenverbindungsleitung (5) zur Leitung des gasförmigen Mediums und eine Steuerleitung (6) zur Steuerung des Ventilmoduls (3) als Slave durch das Pumpenmodul (2) als System-Master angeordnet sind, wobei eine Mehrzahl von Gaskissenverbindungsleitungen (7) zwischen dem Ventilmodul (3) und jeweils einem Gaskissen (4) angeordnet ist, wobei die Gaskissen in mehrere Gruppen aufgeteilt und zumindest teilweise in mehreren Reihen angeordnet sind, wobei ein Teil der Gaskissen (4) dazu ausgebildet ist, in einer Rückenlehne (13), ein Teil der Gaskissen (4) in einem Sitzteil (14), und ein Teil der Gaskissen (4) in einer Beinauflage (15) angeordnet zu werden, wobei jedes Gaskissen (4) individuell ansteuerbar ist, wobei das Flugzeugsitz-Massagesystem unabhängig von einem Sitzsteuersystem betreibbar ist und wobei die Steuerleitung (6) durch eine Spannungsversorgungsleitung, eine Drehzahlsteuerleitung oder durch eine Bus-Verbindung gebildet ist.

2. Flugzeugsitz-Massagesystem nach Anspruch 1, **dadurch gekennzeichnet,** wobei zumindest zwei Gaskissen (4), insbesondere zwanzig, insbesondere vierzig Gaskissen (4) vorhanden sind.

3. Flugzeugsitz-Massagesystem nach Anspruch 1,
**dadurch gekennzeichnet, dass** eine Schaltereinheit und/oder eine PCU (Passenger Control Unit) direkt ohne Busverbindung mit dem System-Master verbunden ist.

4. Flugzeugsitz-Massagesystem nach Anspruch 1 oder 2, **dadurch gekennzeichnet, dass** ein Sitzsteuerungssystem (8) (Seat Acutation System - SAS) über einen Bus-Anschluss(9) an den System-Master (Ventilmodul (3) oder-Pumpenmodul (2)) angeschlossen ist oder anschließbar ist.

5. Flugzeugsitz-Massagesystem nach Anspruch 1, 2, 3 oder 4, **dadurch gekennzeichnet, dass** einer oder mehrere Drucksensoren (23) an dem Ventilmodul (3) und/oder an dem Sitzsteuerungssystem (8) angeschlossen ist/sind, wobei die Drucksensoren (23) zur Messung des Kissendrucks der Gaskissen (4) und/oder zur Sitzbelegungserkennung und/ oder zur Erfassung von Passagierdaten, wie Größe und Gewicht dienen.

6. Flugzeugsitz-Massagesystem nach zumindest einem der vorangehenden Ansprüche, **dadurch gekennzeichnet, dass** ein oder mehrere Gaskissen (4) mit einer Heizfunktion ausgestattet sind, wobei die einzelnen Gaskissen individuell ansteuerbar sind.

7. Flugzeugsitz-Massagesystem nach Anspruch 6, **dadurch gekennzeichnet, dass** die Heizfunktion der Gaskissen (4) abhängig von einem Massageprogramm und/oder abhängig von der Umgebungstemperatur in der Kabine und/oder als Sitzheizungsfunktion ansteuerbar ist.

8. Flugzeugsitz-Massagesystem nach Anspruch 7, **dadurch gekennzeichnet, dass** die Heizfunktion der Gaskissen (4) über das Sitzsteuerungssystem (8) oder über den System-Master ansteuerbar ist.

9. Flugzeugsitz-Massagesystem nach zumindest einem der vorangehenden Ansprüche, **dadurch gekennzeichnet, dass** eine Benutzerschnittstelle (11) (Human-Machine-Interface - HMI) elektrisch oder durch eine Funkverbindung mit dem System-Master oder dem Sitzsteuerungssystem (8) verbunden ist.

10. Flugzeugsitz-Massagesystem nach zumindest einem der vorangehenden Ansprüche, **dadurch gekennzeichnet, dass** das Ventilmodul (3) Formgedächtniselemente enthält, durch welche jeweils zumindest ein Ventil individuell betätigbar ist oder eine Ventilfunktion steuer- oder regelbar ist.

11. Flugzeugsitz-Massagesystem nach zumindest einem der vorangehenden Ansprüche, **dadurch gekennzeichnet, dass** das Ventilmodul (3) Zusatzanschlüsse (24) für weitere Gaskissen (4) aufweist.

12. Flugzeugsitz-Massagesystem nach zumindest einem der vorangehenden Ansprüche, **dadurch gekennzeichnet, dass** der System-Master in einer Daisy-Chain-Verschaltung integriert oder integrierbar ist.

13. Flugzeugsitz-Massagesystem nach zumindest einem der vorangehenden Ansprüche, **dadurch gekennzeichnet, dass** der System-Master ein eingebautes Testequipment zur Durchführung eines Selbsttests aufweist (Built-In-TestEquipment - BITE).

14. Flugzeugsitz-Massagesystem nach zumindest einem der vorangehenden Ansprüche, **dadurch gekennzeichnet, dass** der System-Master einen auslesbaren elektronischen Fehlerspeicher enthält.

15. Flugzeugsitz-Massagesystem nach zumindest einem der Ansprüche 1 bis 15, **dadurch gekennzeichnet, dass** es mit einem übergeordneten Flugzeug-Daten-Modul verbunden ist, wobei dieses mit einem auslesbaren Fehlerspeicher ausgestattet sein kann.

16. Flugzeugsitz-Massagesystem nach zumindest einem der vorangehenden Ansprüche, **dadurch gekennzeichnet, dass** ein Teil der Gaskissen (4) als Lordosenstütze (16) dienen.

17. Flugzeugsitz-Massagesystem nach zumindest einem der vorangehenden Ansprüche, **dadurch gekennzeichnet, dass** ein oder mehrere Gaskissen (4) mittels Flansch- oder Klettverschluss oder mittels Reißverschluss mit einem Sitzelement verbunden ist/sind.

18. Flugzeugsitz-Massagesystem nach zumindest einem der vorangehenden Ansprüche, **dadurch gekennzeichnet, dass** eine Mehrzahl von Gaskissen (4) durch Auslesen und Auswerten von Passagierdaten, insbesondere mit Hilfe eines Auswertemoduls (12), individuell voreinstellbar sein können.

19. Flugzeugsitz-Massagesystem nach zumindest einem der vorangehenden Ansprüche, **dadurch gekennzeichnet, dass** der Füllgrad einer Mehrzahl von Gaskissen (4) an die Größe und das Gewicht des Passagiers anpassbar ist.

20. Flugzeugsitz-Massagesystem nach zumindest einem der vorangehenden Ansprüche, **dadurch gekennzeichnet, dass** die Füllung der Gaskissen (4) in Abhängigkeit von der Sitzposition steuerbar ist.

21. Flugzeugsitz-Massagesystem nach zumindest einem der vorangehenden Ansprüche, **dadurch gekennzeichnet, dass** die Sitzgeometrie und die Sitzhärte in einer TTL-Position (Taxi-Takeoff-Landing), die insbesondere bei Start- und Landung eingenommen werden muss, für bequemes aber stabiles Sitzen optimiert ist.

22. Flugzeugsitz-Massagesystem nach zumindest einem der vorangehenden Ansprüche, **dadurch gekennzeichnet, dass** der Sitz in jeder Position, insbesondere in einer Relax-Position eine Massagesitz-Funktionalität aufweist, in welcher die Gasmenge in den Gaskissen (4) alternierend erhöht und reduziert werden kann.

23. Flugzeugsitz-Massagesystem nach zumindest einem der vorangehenden Ansprüche, **dadurch gekennzeichnet, dass** es eine Aktivsitz-Funktion aufweist durch welche eine unmerkliche Umlagerung des Sitzpassagiers durch allmähliches Füllen und Ablassen des gasförmigen Mediums aus einzelnen oder einer Mehrzahl von Gaskissen (4) erfolgt.

24. Flugzeugsitz-Massagesystem nach zumindest einem der vorangehenden Ansprüche, **dadurch gekennzeichnet, dass** der Sitz in einer Liegeposition (Full Flat) für die Bedürfnisse eines bequemen Schlafs optimiert sind, insbesondere für die individuellen Bedürfnisse des jeweiligen Passagiers.

25. Flugzeugsitz-Massagesystem nach einem der vorherigen Ansprüche, **dadurch gekennzeichnet, dass** die Steuerleitung
(6) zur Steuerung des Pumpenmoduls (2) als Slave durch das Ventilmodul (3) als System-Master und die Pumpenverbindungsleitung (5) zwischen dem Pumpenmodul (2) und dem Ventilmodul (3) angeordnet sind.

26. Flugzeugsitz mit einem Massagesystem nach zumindest einem der vorangehenden Ansprüche.

## Claims

1. Aircraft seat massage system (1), comprising a plurality of fillable gas cushions, a pump module (2) having a pump motor which is designed as a brushless DC motor, BLDC motor, for conveying a gaseous medium, and a valve module (3) for feeding the gaseous medium to the plurality of fillable gas cushions (4) and/or releasing it therefrom, wherein arranged between the pump module (2) and the valve module (3) are a pump connection line (5) for conducting the gaseous medium and a control line (6) for controlling the valve module (3) as slave by the pump module (2) as system master, wherein a plurality of gas cushion connection lines (7) are each arranged between the valve module (3) and a gas cushion (4), wherein the gas cushions are divided into multiple groups and are at least in part arranged in multiple rows, wherein some of the gas cushions (4) are designed to be arranged in a backrest (13), some of the gas cushions (4) are designed to be arranged in a seat part (14), and some of the gas cushions (4) are designed to be arranged in a leg support (15), wherein each gas cushion (4) can be controlled individually, wherein the aircraft seat massage system can be operated independently of a seat actuation system, and wherein the control line (6) is formed by a power supply line, a speed control line or by a bus connection.

2. Aircraft seat massage system according to claim 1, characterized wherein at least two gas cushions (4), in particular twenty, in particular forty gas cushions (4), are provided.

3. Aircraft seat massage system according to claim 1, **characterized in that** a switch unit and/or a PCU (Passenger Control Unit) is connected to the system master directly, without a bus connection.

4. Aircraft seat massage system according to claim 1 or 2, **characterized in that** a seat actuation system (SAS) (8) is connected or can be connected to the system master (valve module (3) or pump module (2)) via a bus connection (9).

5. Aircraft seat massage system according to claim 1, 2, 3 or 4, **characterized in that** one or more pressure sensors (23) is/are connected to the valve module (3) and/or to the seat actuation system (8), wherein the pressure sensors (23) serve to measure the cushion pressure of the gas cushions (4) and/or to detect seat occupancy and/or to capture passenger data, such as size and weight.

6. Aircraft seat massage system according to at least one of the preceding claims, **characterized in that** one or more gas cushions (4) are equipped with a heating function, wherein the individual gas cushions can be controlled individually.

7. Aircraft seat massage system according to claim 6, **characterized in that** the heating function of the gas cushions (4) can be controlled as a function of a massage program and/or as a function of the ambient temperature in the cabin and/or as a seat heating function.

8. Aircraft seat massage system according to claim 7, **characterized in that** the heating function of the gas cushions (4) can be controlled via the seat actuation system (8) or via the system master.

9. Aircraft seat massage system according to at least one of the preceding claims, **characterized in that** a user interface (11) (Human-Machine Interface - HMI) is connected to the system master or to the seat actuation system (8) electrically or by a wireless connection.

10. Aircraft seat massage system according to at least one of the preceding claims, **characterized in that** the valve module (3) contains shape memory elements, by which in each case at least one valve can be actuated individually or a valve function can be controlled or regulated.

11. Aircraft seat massage system according to at least one of the preceding claims, **characterized in that** the valve module (3) has additional connections (24) for further gas cushions (4).

12. Aircraft seat massage system according to at least one of the preceding claims, **characterized in that** the system master is integrated or can be integrated in a daisy-chain circuit.

13. Aircraft seat massage system according to at least one of the preceding claims, **characterized in that** the system master has built-in test equipment (BITE) for performing a self-test.

14. Aircraft seat massage system according to at least one of the preceding claims, **characterized in that** the system master contains a readable electronic fault memory.

15. Aircraft seat massage system according to at least one of claims 1 to 15, **characterized in that** it is connected to a higher-level aircraft data module, wherein the latter can be equipped with a readable fault memory.

16. Aircraft seat massage system according to at least one of the preceding claims, **characterized in that** some of the gas cushions (4) serve as lumbar support (16).

17. Aircraft seat massage system according to at least one of the preceding claims, **characterized in that** one or more gas cushions (4) is/are connected to a seat element by means of a flange fitting or a hook-and-loop fastener or by means of a zip fastener.

18. Aircraft seat massage system according to at least one of the preceding claims, **characterized in that** a plurality of gas cushions (4) can be preset individually by reading and evaluating passenger data, in particular with the aid of an evaluation module (12).

19. Aircraft seat massage system according to at least one of the preceding claims, **characterized in that** the degree of filling of a plurality of gas cushions (4) can be adapted to the size and weight of the passenger.

20. Aircraft seat massage system according to at least one of the preceding claims, **characterized in that** the filling of the gas cushions (4) can be controlled as a function of the seat position.

21. Aircraft seat massage system according to at least one of the preceding claims, **characterized in that** the seat geometry and the seat hardness is optimized for comfortable but stable sitting in a TTL (Taxi-Takeoff-Landing) position, which in particular must be assumed during takeoff and landing.

22. Aircraft seat massage system according to at least one of the preceding claims, **characterized in that** the seat has in every position, in particular in a relaxing position, a massage seat functionality, in which the quantity of gas in the gas cushions (4) can be increased and reduced in an alternating fashion.

23. Aircraft seat massage system according to at least one of the preceding claims, **characterized in that** it has an active seat function, by which an imperceptible repositioning of the seat passenger takes place by gradual filling and releasing of the gaseous medium from individual or a plurality of gas cushions (4).

24. Aircraft seat massage system according to at least one of the preceding claims, **characterized in that** the seat in a full-flat position is optimized to the requirements for comfortable sleeping, in particular to the individual requirements of the respective passenger.

25. Aircraft seat massage system according to at least one of the preceding claims, **characterized in that** the control line (6), for controlling the pump module (2) as slave by the valve module (3) as system master, and the pump connection line (5) are arranged between the pump module (2) and the valve module (3).

26. Aircraft seat comprising a massage system according to at least one of the preceding claims.

## Revendications

1. Système de massage pour siège d'avion (1), avec une pluralité de coussins gonflables, un module de pompe (2) qui comprend un moteur de pompe, qui est conçu avec un moteur à courant continu sans balais, pour le transport d'un fluide gazeux, un module de vannes (3) pour l'introduction et/ou l'évacuation du fluide gazeux vers ou depuis la pluralité de coussins gonflables (4),
dans lequel, entre le module de pompe (2) et le module de vannes (3), sont disposées une conduite de raccordement de pompe (5) pour la conduite du fluide gazeux et une conduite de commande (6) pour le contrôle du module de vannes (3), en tant qu'esclave, par le module de pompe (2), en tant que maître du système,
dans lequel une pluralité de conduites de raccordement de coussins gonflables (7) sont disposées entre le module de vannes (3) et chaque coussin gonflable (4),
dans lequel les coussins gonflables sont répartis en plusieurs groupes et sont disposés au moins partiellement en plusieurs rangées,
dans lequel une partie des coussins gonflables (4) sont conçus pour être disposés dans un dossier (13), une partie des coussins gonflables (4) dans une partie d'assise (14) et une partie des coussins gonflables (4) dans un repose-jambes (15),
dans lequel chaque coussin gonflable (4) peut être contrôlé individuellement,
dans lequel le système de massage pour siège d'avion peut être actionné indépendamment d'un système de commande de siège et
dans lequel la conduite de commande (6) est constituée d'une conduite d'alimentation en tension, d'une conduite de commande de vitesse de rotation ou d'une liaison par bus.

2. Système de massage pour siège d'avion selon la revendication 1, **caractérisé en ce qu'**au moins deux coussins gonflables (4), plus particulièrement vingt, plus particulièrement quarante coussins gonflables (4) sont présents.

3. Système de massage pour siège d'avion selon la revendication 1, **caractérisé en ce qu'**une unité de commutation et/ou une PCU (Passenger Control Unit) est reliée directement au maître du système, sans liaison par bus.

4. Système de massage pour siège d'avion selon la revendication 1 ou 2, **caractérisé en ce qu'**un système de commande de siège (8) (Seat Acutation System - SAS) est ou peut être raccordé au maître du système (module de vannes (3) ou module de pompe (2) via une liaison par bus (9).

5. Système de massage pour siège d'avion selon la revendication 1, 2, 3 ou 4, **caractérisé en ce qu'**un ou plusieurs capteurs de pression (23) sont raccordés au module de vannes (3) et/ou au système de commande de siège (8), les capteurs de pression (23) permettant la mesure de la pression des coussins gonflables (4) et/ou la détection d'occupation du siège et/ou la saisie de données concernant les passagers, telles que la taille et le poids.

6. Système de massage pour siège d'avion selon au moins l'une des revendications précédentes, **caractérisé en ce qu'**un ou plusieurs coussins gonflables (4) sont équipés d'une fonction de chauffage, les coussins gonflables individuels pouvant être contrôlés individuellement.

7. Système de massage pour siège d'avion selon la revendication 6, **caractérisé en ce que** la fonction de chauffage des coussins gonflables (4) peut être contrôlée en fonction d'un programme de massage et/ou en fonction de la température ambiante dans la cabine et/ou comme une fonction de chauffage du siège.

8. Système de massage pour siège d'avion selon la revendication 7, **caractérisé en ce que** la fonction de chauffage des coussins gonflables (4) peut être contrôlée via le système de commande de siège (8) ou via le maître du système.

9. Système de massage pour siège d'avion selon au moins l'une des revendications précédentes, **caractérisé en ce qu'**une interface utilisateur (11) (Human-Machine-Interface - HMI) est reliée électriquement ou par une connexion radio au maître du système ou au système de commande de siège (8).

10. Système de massage pour siège d'avion selon au moins l'une des revendications précédentes, **caractérisé en ce que** le module de vannes (3) contient des éléments à mémoire de forme, par l'intermédiaire desquels au moins une vanne respective peut être actionnée individuellement ou une fonction de vanne peut être contrôlée ou régulée.

11. Système de massage pour siège d'avion selon au moins l'une des revendications précédentes, **caractérisé en ce que** le module de vannes (3) présente des raccords supplémentaires (24) pour d'autres coussins gonflables (4).

12. Système de massage pour siège d'avion selon au moins l'une des revendications précédentes, **caractérisé en ce que** le maître du système est ou peut être intégré dans un montage en guirlande.

13. Système de massage pour siège d'avion selon au moins l'une des revendications précédentes, **caractérisé en ce que** le maître du système présente un équipement de test intégré pour l'exécution d'un autotest (Built-In-Test-Equipment - BITE).

14. Système de massage pour siège d'avion selon au moins l'une des revendications précédentes, **caractérisé en ce que** le maître du système contient une mémoire d'erreurs électronique lisible.

15. Système de massage pour siège d'avion selon au moins l'une des revendications 1 à 15, **caractérisé en ce qu'**il est relié à un module supérieur de données d'avion, celui-ci pouvant être équipé d'une mémoire d'erreurs lisible.

16. Système de massage pour siège d'avion selon au moins l'une des revendications précédentes, **caractérisé en ce qu'**une partie des coussins gonflables (4) servent de supports lombaires (16).

17. Système de massage pour siège d'avion selon au moins l'une des revendications précédentes, **caractérisé en ce qu'**un ou plusieurs coussins gonflables (4) sont reliés à un élément d'assise par bride ou fermeture velcro ou par fermeture éclair.

18. Système de massage pour siège d'avion selon au moins l'une des revendications précédentes, **caractérisé en ce qu'**une pluralité de coussins gonflables (4) peuvent être préréglés individuellement par lecture et analyse de données passagers, plus particulièrement à l'aide d'un module d'analyse (12).

19. Système de massage pour siège d'avion selon au moins l'une des revendications précédentes, **caractérisé en ce que** le degré de remplissage d'une pluralité de coussins gonflables (4) peut être adapté à la taille et au poids du passager.

20. Système de massage pour siège d'avion selon au moins l'une des revendications précédentes, **caractérisé en ce que** le remplissage des coussins gonflables (4) peut être contrôlé en fonction de la position du siège.

21. Système de massage pour siège d'avion selon au moins l'une des revendications précédentes, **caractérisé en ce que** la géométrie du siège et la dureté du siège sont optimisées dans une position TTL (Taxi-Takeoff-Landing), qui doit notamment être adoptée au décollage et à l'atterrissage, pour une assise confortable mais stable.

22. Système de massage pour siège d'avion selon au moins l'une des revendications précédentes, **caractérisé en ce que** le siège présente une fonctionnalité de siège massant dans chaque position, notamment dans une position de relaxation, dans laquelle la quantité de gaz dans les coussins gonflables (4) peut être augmentée et réduite alternativement.

23. Système de massage pour siège d'avion selon au moins l'une des revendications précédentes, **caractérisé en ce qu'**il présente une fonction de siège actif par laquelle un déplacement imperceptible du passager du siège est effectué grâce à un remplissage et une évacuation progressifs du fluide gazeux d'un ou d'une pluralité de coussins gonflables (4).

24. Système de massage pour siège d'avion selon au moins l'une des revendications précédentes, **caractérisé en ce que** le siège est optimisé dans une position allongée (Full Flat) pour les besoins d'un sommeil confortable, notamment pour les besoins individuels du passager respectif.

25. Système de massage pour siège d'avion selon l'une des revendications précédentes, **caractérisé en ce que** la conduite de commande (6) pour le contrôle du module de pompe (2), en tant qu'esclave, par le module de vannes (3), en tant que maître du système et la conduite de raccordement de pompe (5), sont disposées entre le module de pompe (2) et le module de vannes (3).

26. Siège d'avion avec un système de massage selon au moins l'une des revendications précédentes.
